# EUROPÄISCHE PATENTSCHRIFT

(11) **EP 3 176 086 B1**
(45) Veröffentlichungstag und Bekanntmachung des Hinweises auf die Patenterteilung: **27.06.2018**
(21) Anmeldenummer: 16198583.3
(22) Anmeldetag: 14.11.2016
(51) Int. Cl.: B64D 1/22, B66C 1/34

(54) **HELIKOPTERLASTENHAKEN**
HELICOPTER LOAD HOOK
CROCHET DE CHARGE POUR HÉLICOPTÈRE

(30) Priorität: 01.12.2015 CH 17552015
(43) Veröffentlichungstag der Anmeldung: 07.06.2017
(73) Patentinhaber: Marenco Swisshelicopter AG, 8753 Mollis (CH)
(72) Erfinder: Stucki, Martin, 8330 Pfäffikon (CH); Donno, Cosimo, 8422 Pfungen (CH)
(74) Vertreter: Schneider Feldmann AG Patent- und Markenanwälte

(56) Entgegenhaltungen:
- GB-A- 839 629
- US-A- 3 575 459
- US-A1- 2006 175 851

## Beschreibung

### Technisches Gebiet

Die vorliegende Erfindung beschreibt einen Helikopterlastenhaken, umfassend ein Gehäuse, ein Haken und eine ortsfest im Gehäuse lagerbare Freigabeeinrichtung zur steuerbaren Feststellung und Freigabe einer Schwenkbewegung des Hakens um eine Hakendrehachse, wobei die Freigabeeinrichtung einen Magnetschalter und eine rotierbare Trommel umfasst.

### Stand der Technik

Damit Helikopter auch für Lastenflüge einsetzbar sind, sind Helikopterlastenhaken bekannt, die an der Kabinenunterseite einer Kabinenstruktur des Helikopters befestigbar sind. Derartige Helikopterlastenhaken sind in der Regel fernbedienbar mit unterschiedlichen Antrieben ausgestattet erhältlich.

In der US3575459 wird ein Helikopterlastenhaken mit einem Gehäuse beschrieben, der eine verschwenkbare Bewegung und eine automatische Auslösung des Helikopterlastenhakens mittels einer Betätigungsmechanik erlaubt, sodass kein Personal zum Öffnen des Helikopterlastenhakens erforderlich ist. In dem Gehäuse des Helikopterlastenhakens ist ein schwenkbarer Haken angeordnet, welcher mit einer exzentrisch angeordneten Freigabeeinrichtung zusammenwirkt.

Damit der Haken in der Geschlossenstellung verbleibt können eine Feder oder Gegengewichte vorgesehen sein, die den Haken in die Geschlossenstellung zwingen. Die aus dem Gehäuse herausragende Spitze des Hakens wirkt mit einer schwenkbaren Sicherungslasche zusammen. Auch die Sicherungslasche wird mit Hilfe einer Feder gegen den Haken gedrückt, damit der Haken eine Ladung nicht ungewünscht freigibt.

Es werden mehrere Arretierungsarme, durch Federn gespannt gehalten genutzt, wobei die Arretierungsarme mit Arretierungsscheiben zusammenwirken, damit eine Öffnung des Hakens erreicht werden kann. Eine mehrteilige Auslösevorrichtung ist nötig, welche um eine weitere Drehachse schwenkbewegbar ist. Die Auslösevorrichtung umfasst einen Magnetschalter, auch Solenoid genannt, mittels welchem die Auslösevorrichtung und damit die Freigabeeinrichtung durch Betätigung eines Antriebshebels und eines Auslösearms elektromagnetisch auslösbar ist. Die Auslösevorrichtung weist Mittel auf, die mit entsprechenden Mitteln der Arretierungsscheibe zusammenwirken können.

Insgesamt sind der Helikopterlastenhaken und vor allem die Freigabeeinrichtung mit einer Vielzahl von Bauteilen ausgestaltet, wobei aufgrund der Nutzung vieler Federn und filigran ausgestalteter Hebel und Arme eine komplizierte und wenig robuste Freigabeeinrichtung resultiert. Die Freigabeeinrichtung ist elektrisch betätigbar, wirkt aber konstruktionsbedingt labil. In einer weiteren Ausführungsform werden in der US3575459 sogar zwei der beschriebenen Helikopterlastenhaken mit jeweils einer Freigabeeinrichtung kombiniert. Aber auch dieser Aufbau scheint aufgrund der verwendeten Bauteile mechanisch wenig robust, bedingt entsprechend einen erhöhten Wartungs- bzw. Kontrollaufwand und durch die Anzahl Bauteile eine komplizierte Herstellung. Es sind ausserdem keine Mittel vorgesehen, die dem Piloten erlauben die momentane Stellung des Helikopterlastenhakens aus dem Cockpit heraus zu erkennen.

Ein weiterer Helikopterlastenhaken ist in der US2006175851 beschrieben. Ein Haken ist in einem Gehäuse drehbar gelagert und mittels einer Freigabeeinrichtung kann der Haken aus einer Geschlossenstellung in eine Offenstellung gebracht werden. Ein Magnetschalter in Form einer Zylinderspule wirkt dabei direkt auf zwei Arme der Freigabeeinrichtung. Die vom Haken direkt auf den Magnetschalter wirkenden Kräfte sind nachteilig und führen zu einer starken Abnützung. Entsprechend sind umfangreiche periodische Wartungen des Helikopterlastenhakens samt Freigabeeinrichtung nötig. Der Helikopterlastenhaken der US2006175851 weist zwar Sensoren auf, welche über eine Elektronik LEDs ansteuern, sodass das Bodenpersonal anhand der LEDs feststellen kann, ob sich der Haken in seiner korrekten Geschlossenstellung befindet. Der Pilot hat vom Helikoptercockpit aus aber keine Möglichkeit den Schliesszustand des Helikopterlastenhakens zu sehen.

### Darstellung der Erfindung

Die vorliegende Erfindung hat sich zur Aufgabe gestellt einen Helikopterlastenhaken mit einer Freigabeeinrichtung auszubilden, wobei der Helikopterlastenhaken und die Freigabeeinrichtung jeweils eine kompakte Bauform mit verringerter Anzahl von Bauteilen und eine gesteigerte mechanische Stabilität aufweisen, wobei auf den Magnetschalter wirkende Kräfte und Drehmomente reduziert sind. Aufgrund minimierter Abnutzung können damit notwendige Wartungsintervalle vergrössert werden.

Diese Aufgabe wird mit der Freigabeeinrichtung eines Helikopterlastenhaken mit den Merkmalen des Patentanspruches 1 gelöst.

Zusätzlich wird einem Piloten die Möglichkeit gegeben, die Geschlossenstellung und Offenstellung des Hakens des Helikopterlastenhakens bequem aus dem Helikoptercockpit heraus zu erkennen.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.
- Figur 1a: zeigt eine Seitenansicht eines Helikopterlastenhakens, während
- Figur 1b: eine Aufsicht auf den Helikopterlastenhaken mit Haken in Geschlossenstellung zeigt.
- Figur 2: zeigt eine perspektivische Ansicht des Helikopterlastenhakens mit teilweise geöffnetem Gehäuse.
- Figur 3: zeigt eine perspektivische Ansicht eines Kraftaufnehmers, während
- Figur 4: einen Haken mit daran angeordnetem Kraftaufnehmer in einer perspektivischen Ansicht zeigt.
- Figur 5: zeigt eine Aufsicht auf einen Helikopterlastehaken mit teilweise entferntem Gehäuse, wobei die in der Geschlossenstellung wirkenden Kräfte dargestellt sind.
- Figuren 6: zeigen Ansichten der verschiedenen Hakenzustände von der Geschlossenstellung bis zur Offenstellung, während die
- Figuren 7: den Ablauf von der Offenstellung bis zur Geschlossenstellung zeigen.

### Beschreibung

Ein Helikopterlastenhaken 1 umfasst ein Gehäuse 10, welches hier zweiteilig ausgeführt ist und mit mindestens einer Gehäuseöse 100 ausgestattet direkt oder indirekt an einer Kabinenstruktur eines Helikopters befestigbar ist. An dem von der Gehäuseöse 100 entfernten Ende des Gehäuses 10 befindet sich ein schwenkbewegbarer Haken 11, der in einer Geschlossenstellung wirkverbunden mit einer fixierten Sicherungslasche 12 gehalten wird. Am Haken 11 kann eine Last mittels eines eingehängten Lastenseils 3 befestigt werden. Die Kabinenstruktur und die Last sind hier nicht dargestellt.

Im Zentrum des Helikopterlastenhakens 1 befindet sich innerhalb des Gehäuses 10 eine Freigabeeinrichtung 2, welche die Stellung des Hakens 11 bestimmt bzw. den Haken 11 in einer Geschlossenstellung fixiert und gesteuert freigeben kann. Durch mindestens eine Anzeigefahne 212, welche durch die Freigabeeinrichtung 2 bewegbar ist, wird die aktuelle Stellung des Hakens 11 des Helikopterhakens 1 angezeigt, sodass diese aktuelle Stellung für einen Helikopterpiloten aus dem Cockpit heraus erkennbar ist. Im Gehäuse 10 bzw. einem Gehäuseteil ist eine Anzeigeöffnung 101 ausgespart, durch welche die Anzeigefahne 212 bewegbar ist und durch welche sie aus dem Gehäuse 10 herausragt.

Der Helikopterlastenhaken 1 bzw. die Freigabeeinrichtung 2 ist hier elektrisch mittels einer nicht gezeigten Steuerelektronik betätigbar. Die Steuerelektronik ist über mindestens einen elektrischen Anschluss 13 mit der Freigabeeinrichtung 2 verbunden. Es sind wahlweise aber auch andere Betätigungsmöglichkeiten der Freigabeeinrichtung 2, beispielsweise mechanisch oder hydraulisch gelöst, möglich, wobei auch Kombinationen davon ausgeführt werden können. Im Folgenden wird aber eine rein elektrische Betätigung beschrieben.

Der Haken 11 weist hier eine Hakenspitze 110 mit einer Vertiefung 1100 auf. In der Geschlossenstellung des Hakens 11 findet ein Teil der Sicherungslasche 12 in der Vertiefung 1100 Aufnahme, wodurch ein ungewolltes Öffnen des Hakens 11 zusätzlich verhindert wird.

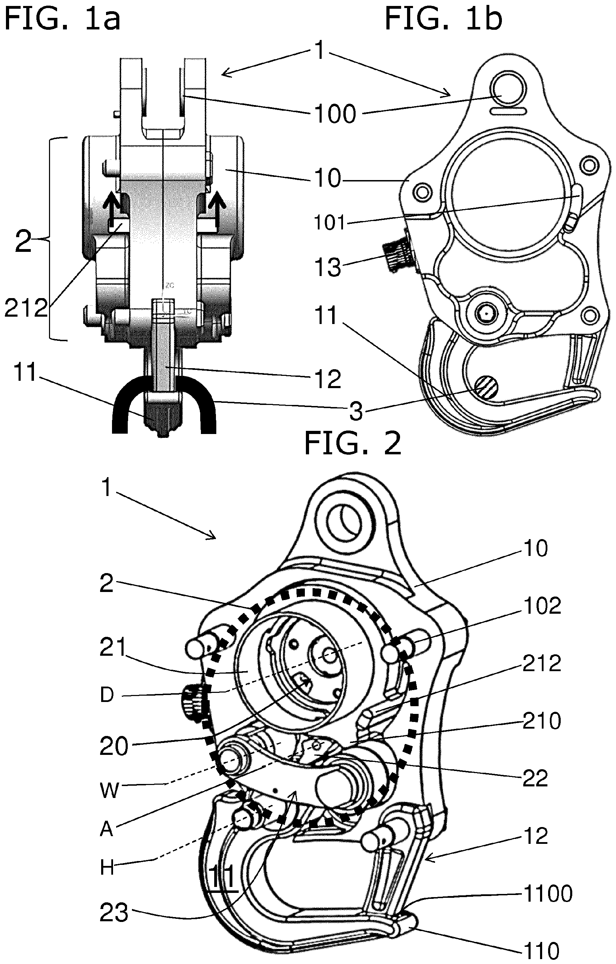

Figur 2 zeigt ein Gehäuse 10, wobei eine Gehäusehälfte entfernt wurde. Die Gehäusehälften nehmen die im Folgenden beschriebenen Bauteile auf und sind mittels Befestigungsmitteln 102 ein geschlossenes Gehäuse 10 bildend verbindbar. Da das Gehäuse 10 zu Wartungszwecken geöffnet werden muss, bietet sich eine Verschraubung der Gehäusehälften und damit eine lösbare Verbindung an.

Zentral im Gehäuse 10 zwischen der mindestens einen Gehäuseöse 100 und dem bewegbaren Haken 11 ist die Freigabeeinrichtung 2 angeordnet, durch den gestrichelten Kreis hervorgehoben. Die Freigabeeinrichtung 2 umfasst mindestens einen Magnetschalter 20, eine Trommel 21, ein Arretierstück 22 und einen Kraftaufnehmer 23.

Der Magnetschalter 20 ist in Form einer Zylinderspule ausgebildet, in welcher ein Magnetfeld erzeugt werden kann, gesteuert mittels Steuerelektronik. Der Magnetschalter 20 vermag dadurch die Trommel 21 durch einen elektromagnetischen Antrieb um eine Magnetschalterdrehachse D zu rotieren. An der Trommel 21 sind eine Verriegelungsnase 210 und die Anzeigefahne 212 angeordnet bzw. angeformt, die bei Betätigung mit der Trommel 21 mit rotierbar sind.

Der Kraftaufnehmer 23 ist um eine Schwenkachse W, das Arretierstück 22 um eine Arretierstückdrehachse A und der Haken 11 um eine Hakendrehachse H rotierbar, wobei alle Achsen W, A, H parallel zueinander ausgerichtet sind, etwa senkrecht zur Ebene in der sich der Haken 11 bewegen kann.

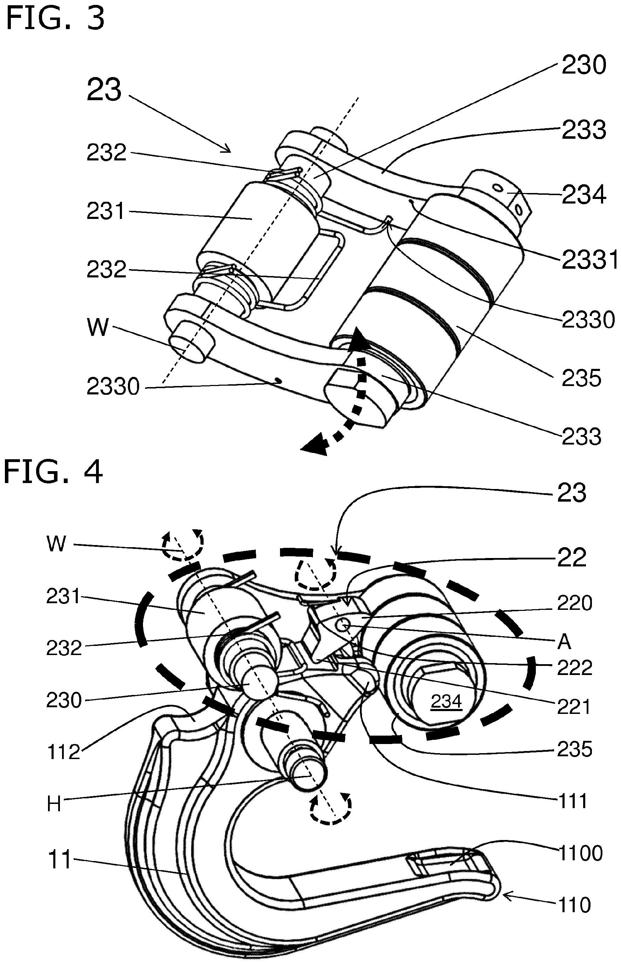

Der Kraftaufnehmer 23 ist in Figur 3 im Detail dargestellt. Eine Welle 230 mit der Schwenkachse W und ein Bolzen 234 werden von zwei Verbindungsblechen 233 zusammengehalten. An der Welle 230 ist mindestens ein Anschlagpuffer 231 und mindestens eine Feder 232 angeordnet. In den Verbindungsblechen 233 sind Federaufnahmen 2330 eingeformt, in welchen die Feder 232 vorgespannt im Kraftaufnehmer 23 befestigbar ist. In einer Arretierstückaufnahme 2331 in einem Verbindungsblech 233 ist das Arretierstück 22 befestigbar.

Der Bolzen 234 ist hier mit mehreren Nadellagern 235 versehen, welche um ihre zentrische Achse rotieren können. Der Kraftaufnehmer 23 kann um die Schwenkachse W, wie mit dem gestrichelten Pfeil gezeigt geschwenkt werden, wobei die Position des Bolzens 234 innerhalb des Gehäuses 10 variierbar ist.

Wie in Figur 4 gezeigt, können Kraftaufnehmer 23 und der Haken 11 wirkverbunden werden. Zur besseren Veranschaulichung ist ein Verbindungsblech 233 aus der Figur 4 entnommen worden, sodass ein Einblick in den Kraftaufnehmer 23 möglich ist. Der Haken 11 weist an seinem der Hakenspitze 110 abgewandten Seite einen Hakenmitnehmer 111 auf, welcher mit dem Bolzen 234 bzw. dem mindestens einen Nadellager 235 und dem Arretierstück 22 zusammenwirkend lagerbar ist. Im Verlauf des Hakens 11, dem Hakenmitnehmer 111 gegenüberliegend, ist ausserdem eine Anschlagaussparung 112 angeordnet. Die Verschwenkung des Hakens 11 um die Hakendrehachse H kann in einer Richtung bis zur Berührung der Anschlagaussparung 112 mit dem Anschlagpuffer 231 erfolgen.

Das Arretierstück 22 ist zwischen den Verbindungsblechen 233 des Kraftaufnehmers 23 angeordnet und umfasst einen Trommelhaltevorsprung 220 und einen entgegengesetzt angeordneten Mitnehmervorsprung 221. Das Arretierstück 22 wird durch eine Arretierstückfeder 222 vorgespannt und ist um die Arretierstückdrehachse A drehbar gelagert. Die Vorspannung der Arretierstückfeder 222 ist hier beispielhaft entgegen dem Uhrzeigersinn ausgeführt, sodass sich das Arretierstück 22 bei Freistellung entgegen dem Uhrzeigersinn in Figur 4 zu drehen versucht.

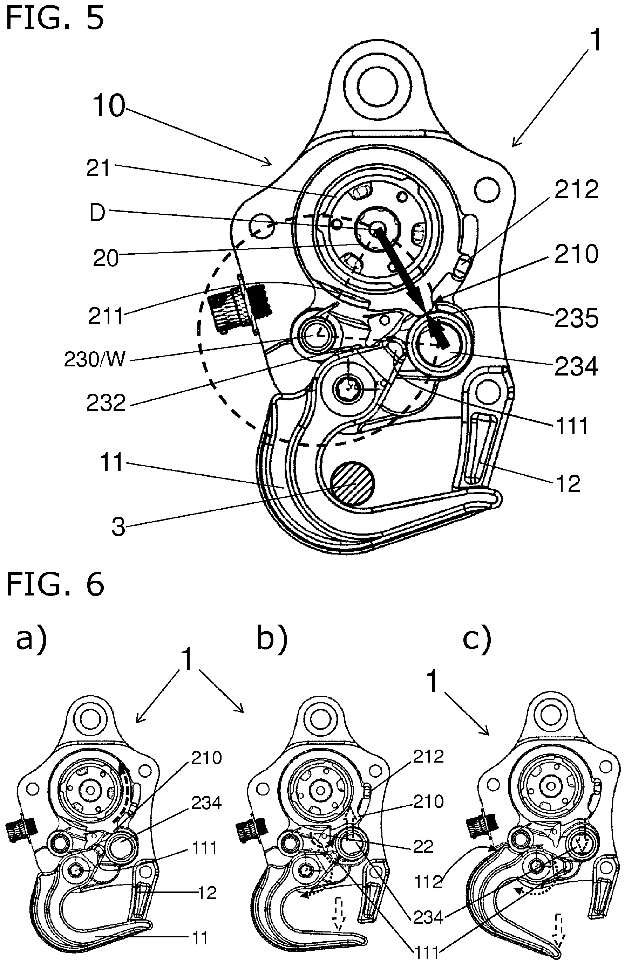

Der vorliegende Helikopterlastenhaken 1 ist im Vergleich zum Stand der Technik mechanisch robuster aufgebaut, da vom Haken 11 in der Geschlossenstellung kaum Kräfte und Drehmomente direkt auf den Magnetschalter 20 der Freigabeeinrichtung 2 einwirken. Dies ist in Figur 5 deutlich gemacht. Der Haken 10 befindet sich in der Geschlossenstellung und wird durch den Bolzen 234 und die daran befindlichen Nadellager 235 an einer Drehbewegung im Uhrzeigersinn gehindert. Entsprechend schliesst der Haken 11 und die Sicherungslasche 12 das Lastenseil 3 ein. Der Hakenmitnehmer 111 drückt auf den Bolzen 234. Der Bolzen 234 wird von der Verriegelungsnase 210 der Trommel 21 in Position gehalten. Da der Kraftaufnehmer 23 nur um die Schwenkachse W schwenken kann, ist eine Bewegung ausgeschlossen. Eine lineare Bewegung des Kraftaufnehmers 23 ist durch das Gehäuse 10 und den Haken 11 unterbunden. Auf die Trommel 21 und damit den Magnetschalter 20 wirkt direkt vom Haken 11 kein Drehmoment. Lediglich der Bolzen 234 drückt gegen die Verriegelungsnase 210 in der Geschlossenstellung des Helikopterlastenhakens 1 und der Haken 11 ist verriegelt. Die Trommel 21 weist eine Kerbe 211 an ihrem Umfang auf, welche mit dem Arretierstück 22 bzw. dem Trommelvorsprung 220 des Arretierstückes 22 zusammenwirkt.

Durch die spezielle Gestaltung des Kraftaufnehmers 23, des Arretierstückes 22 und die relative Anordnung des Hakens 11, werden weniger Kräfte direkt in den Magnetschalter 20 eingeleitet. Mit dieser Konstruktion kann ein verschleissärmerer Helikopterlastenhaken 1 erreicht werden, wodurch die Betriebssicherheit erhöht wird. Die Geschlossenstellung wird durch die Anzeigefahne 212 angezeigt. Die Anzeigefahne 212 ist bevorzugt optisch gut erkennbar gestaltet, beispielsweise mit einer Signalfarbe versehen und ausreichend gross ausgeführt, sodass sie aus mehreren Metern Entfernung erkennbar ist.

Im Folgenden wird das Öffnen des Helikopterlasthakens 1 anhand der Figuren 6a) bis 6c) beschrieben. In der Geschlossenstellung gemäss Figur 6a) ist die Schwenkbarkeit des Hakens 11 um seine Hakendrehachse H unterbunden, da der Hakenmitnehmer 111 am Bolzen 234 anliegt. Da der gesamte Kraftaufnehmer 23 und damit der Bolzen 234 nicht um die Schwenkachse W schwenkbar ist, da die Verriegelungsnase 210 gegen den Bolzen 234 drückt, bleibt der Haken 11 in seiner Verschlussstellung in Kontakt mit der Sicherungslasche 12.
Wird nun der Magnetschalter 20 mit Spannung beaufschlagt führt ein Stromfluss durch die Zylinderspule zur Ausbildung eines Magnetfeldes, welches die Drehung des Magnetschalters 20 (hier entgegen Uhrzeigersinn) bewirkt. Mit dem Magnetschalter 20 wird die Trommel 21 samt Verriegelungsnase 210 mitgedreht.

Das durch die Arretierstückfeder 222 vorgespannte Arretierstück 22 dreht sich derart (hier entgegen Uhrzeigersinn), dass der Trommelhaltevorsprung 220 in die Kerbe 211 der Trommel 21 eingreift und damit die Trommel 21 fixiert. Das Arretierstück 22 hindert die Trommel 21 an einer Zurückdrehung. Da die Verriegelungsnase 210 den Bolzen 234 nicht mehr an einer Bewegung (hier nach oben) hindert, kann der gesamte Kraftaufnehmer 23 um die Schwenkachse W (hier nach oben) schwenken, wobei die Schwenkbewegung des Hakens 11 um die Hakendrehachse H möglich ist. Dabei schwenkt der Hakenmitnehmer 111 am Bolzen 234 bzw. den Nadellagern 235 vorbei (hier mit dem Uhrzeigersinn nach unten). Die Bewegungen sind mit gestrichelten Pfeilen angedeutet. Der Haken 11 schwenkt entsprechend weg von der fixen Sicherungslasche 12.

Der maximale Schwenkweg des Hakens 11 ist erreicht, wenn die Anschlagaussparung 112 des Hakens 11 am Anschlagpuffer 231 anschlägt. Dann ist die Offenstellung des Helikopterlastenhakens 1 erreicht und ein Lastenseil 3 kann zwischen Haken 11 und Sicherungslasche 12 eingefädelt angehängt werden. Diese Offenstellung wird ohne elektrische Spannungsbeaufschlagung des Magnetschalters 20 gehalten. Es werden keine Kräfte oder Drehmomente auf den Magnetschalter 20 übertragen.

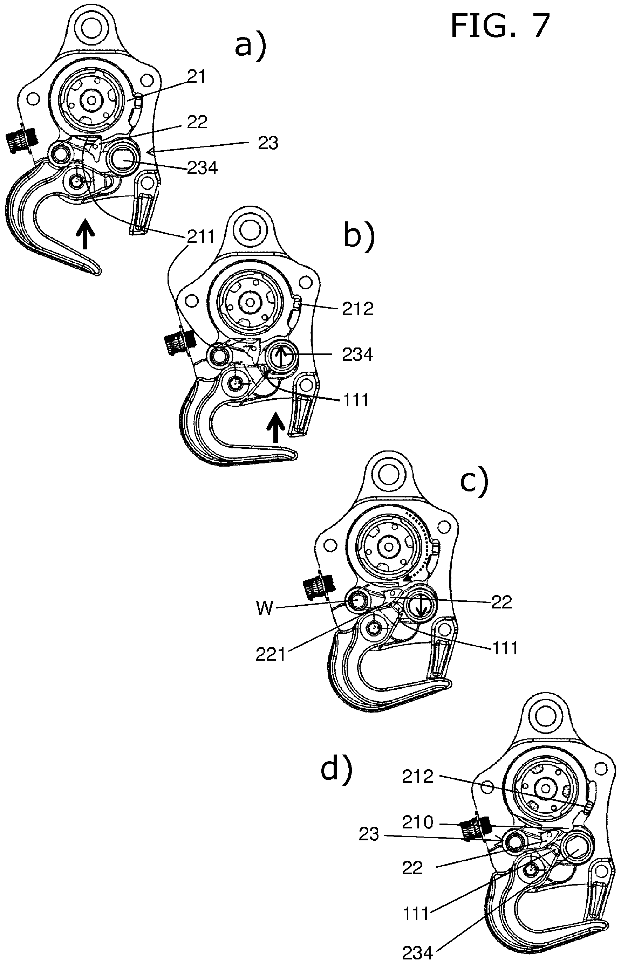

Der Weg von der Offenstellung zur Geschlossenstellung wird anhand der Figuren 7 beschrieben, wobei kein Lastenseil 3 eingehängt wird, sondern der Haken 11 leer geschlossen wird.

Manuell wird der Haken 11 entgegen dem Uhrzeigersinn um die Hakendrehachse H verschwenkt, bis der Hakenmitnehmer 111 am Bolzen 234 bzw. dem Nadellager 235 anschlägt. Der Hakenmitnehmer 111 drückt dabei den Bolzen 234 in Richtung Trommel 21. Der Kraftaufnehmer 23 wird dabei um die Schwenkachse W in Richtung Trommel 21 verschwenkt. Da die Verriegelungsnase 210 der Trommel 21 den Bolzen 234 freigibt, kann der Kraftaufnehmer 23 relativ zur Trommel 21 und dem Haken 11 im Gehäuse 10 verschwenkt werden.

Sobald der Hakenmitnehmer 111 am Bolzen 234 vorbeigeschwenkt wurde, bewegt sich der Bolzen 234 weg von der Trommel 21, wobei der Kraftaufnehmer 23 um die Schwenkachse W von der Trommel 21 wegschwenkt.

Wie in Fig. 7c) erkennbar trifft der Hakenmitnehmer 111 nach dem Vorbeischwenken am Bolzen 234 das Arretierstück 22. Genauer gesagt trifft der Hakenmitnehmer 111 den Mitnehmervorsprung 221 des Arretierstückes 22, wobei das Arretierstück aus der Kerbe 211 der Trommel 21 weggeschwenkt wird. Die Trommel 21 dreht sich danach in ihre Ausgangsposition, was durch den gestrichelten Pfeil dargestellt ist. Der Haken 11 schwenkt in seine Geschlossenstellung, wobei der Hakenmitnehmer 111 durch den Bolzen 234 und damit der Haken 11 gegen ein Aufschwenken gesichert ist. Die Verriegelungsnase 210 verhindert eine Bewegung des Bolzens 234 und damit des Kraftaufnehmers 23. Die Anzeigefahne 212 zeigt die Geschlossenstellung des Hakens 11 an.

Optional kann der mindestens einen Gehäuseöse 100 ein Wägesystem befestigt sein, mittels welchem das Gewicht der anhängenden Last bestimmt werden kann.

In einer bevorzugten Ausführungsform werden zwei elektrisch mittels Steuerelektronik bedienbare Magnetschalter 20 mit jeweils einer Trommel 21 im Gehäuse 10 verbaut. Beide Magnetschalter 20 können den Haken 11 mittels dem Kraftaufnehmer 23 und dem Arretierstück 22 gesteuert öffnen. Damit ist eine Sicherung vorhanden, wenn einer der Magnetschalter 20 ausfallen sollte. Die elektrischen Anschlüsse 13 können in unterschiedlichen Varianten in das Gehäuse 10 geführt werden. Aufgrund der Ausgestaltung der Freigabeeinrichtung 2 bzw. des Kraftaufnehmers 23 und des Arretierstücks 22 können mehr als ein Magnetschalter 20 mit mehr als einer Trommel 21 im Gehäuse 10 gelagert werden und zur Betätigung des Hakens 11 verwendet werden.

Natürlich können auch zusätzliche Antriebe, beispielsweise eine mechanische oder eine hydraulischen Auslösung bzw. die Drehung der Trommel 21 schaffend, benutzt werden.

### Bezugszeichenliste

- 1: Helikopterlastenhaken
10 Gehäuse (zweiteilig)
100 Gehäuseöse
101 Anzeigeöffnung
102 Befestigungsmittel
11 Haken
110 Hakenspitze
1100 Vertiefung
111 Hakenmitnehmer
112 Anschlagaussparung
H Hakendrehachse
12 Sicherungslasche (starr,fixiert)
13 elektrischer Anschluss
- 2: Freigabeeinrichtung
20 Magnetschalter
D Magnetschalterdrehachse
21 Trommel
210 Verriegelungsnase
211 Kerbe
212 Anzeigefahne
22 Arretierstück
220 Trommelhaltevorsprung
221 Mitnehmervorsprung
222 Arretierstückfeder
A Arretierstückdrehachse
23 Kraftaufnehmer
230 Welle
W Schwenkachse
231 Anschlagpuffer
232 Feder (mindestens eine, drückt Haken in Offenposition)
233 Verbindungsblech
2330 Federaufnahme in Verbindungsblech
2331 Arretierstückaufnahme in Verbindungsblech
234 Bolzen
235 Nadellager (damit Verriegelungsnase 210 abrollen kann)
- 3: Lastenseil

## Patentansprüche

1. Helikopterlastenhaken (1), umfassend ein Gehäuse (10), ein Haken (11) und eine ortsfest im Gehäuse (10) lagerbare Freigabeeinrichtung (2) zur steuerbaren Feststellung und Freigabe einer Schwenkbewegung des Hakens (11) um eine Hakendrehachse (H), wobei die Freigabeeinrichtung (2) einen Magnetschalter (20) und eine rotierbare Trommel (21) umfasst,
**dadurch gekennzeichnet, dass**
die Freigabeeinrichtung (2) mindestens ein um eine Arretierstückdrehachse (A) schwenkbewegbares Arretierstück (22) und
mindestens einen um eine Schwenkachse (W) schwenkbewegbaren Kraftaufnehmer (23) mit einem Bolzen (234) umfasst, wobei der Bolzen (234) mit einer Verriegelungsnase (210) an der Trommel (21) sowie einem Hakenmitnehmer (111) am Haken (11) wirkverbindbar ist, sodass eine indirekte Verbindung zwischen Haken (11) und Trommel (21) bzw. Magnetschalter (20) erreichbar ist und eine direkte Berührung des Hakens (11) und des Magnetschalters (20) ausgeschlossen ist, wobei der Bolzen (234) eine Schwenkbewegung des Hakens (11) in der Geschlossenstellung des Hakens (11) verunmöglicht.

2. Helikopterlastenhaken (1) gemäss Anspruch 1, wobei der Kraftaufnehmer (23) eine Welle (230) umfasst, durch welche die Schwenkachse (W) verläuft und welche zusammen mit dem Bolzen (234) durch mindestens ein Verbindungsblech (233) gehalten ist.

3. Helikopterlastenhaken (1) nach einem der vorhergehenden Ansprüche, wobei das Arretierstück (22) mit einer Arretierstückfeder (222) vorgespannt an einem Verbindungsblech (233) des Kraftaufnehmers (23) gelagert ist und durch seine Schwenkbarkeit um die Arretierstückdrehachse (A) mit einer Kerbe (211) an oder in der Trommel (21) wirkverbindbar ist.

4. Helikopterlastenhaken (1) nach einem der vorhergehenden Ansprüche, wobei der Kraftaufnehmer (23) mittels mindestens einer Feder (232) gegen den Haken (11), den Haken (11) in Offenstellung drückend vorgespannt ist.

5. Helikopterlastenhaken (1) nach Anspruch 2 und 4, wobei die Feder (232) des Kraftaufnehmers (23) in mindestens einer Federaufnahme (2330) im mindestens einen Verbindungsblech (233) vorgespannt gehalten ist.

6. Helikopterlastenhaken (1) nach einem der Ansprüche 2 bis 5, wobei am Haken (11) eine Anschlagaussparung (112) vorgesehen ist, welche im geöffneten Zustand des Hakens (11) an einem Anschlagpuffer (231) der Welle (230) anliegt.

7. Helikopterlastenhaken (1) nach einem der vorhergehenden Ansprüche, wobei am Bolzen (234) mindestens ein Nadellager (235) zum verschleissarmen Abrollen des Hakenmitnehmers (111) am Bolzen (234) angeordnet ist.

8. Helikopterlastenhaken (1) nach einem der vorhergehenden Ansprüche, wobei an der Trommel (21) mindestens eine Anzeigefahne (212) angeformt oder befestigt ist, welche durch eine Anzeigeöffnung (101) im Gehäuse (10) bewegbar und aus dem Gehäuse herausragend sichtbar ist.

9. Helikopterlastenhaken (1) nach einem der vorhergehenden Ansprüche, wobei der mindestens eine Magnetschalter (20) elektromagnetisch betreibbar ist und Steuersignale über mindestens einen elektrischen Anschluss (13) an den mindestens einen Magnetschalter (20) übermittelbar sind.

10. Helikopterlastenhaken (1) nach einem der vorhergehenden Ansprüche, wobei
ein zweiter Magnetschalter (20') und eine zweite Trommel (21') im Gehäuse (10) mit dem Kraftaufnehmer (23) und dem Arretierstück (22) zusammenwirkend angeordnet sind.

11. Helikopterlastenhaken (1) nach einem der vorhergehenden Ansprüche, wobei eine Hakenspitze (110) mit einer Sicherungslasche (12) fest am Gehäuse (10) angeordnet wirkverbindbar ist, wobei die Hakenspitze (110) an der dem Hakenmitnehmer (111) entgegengesetzten Seite des Hakens (11) angeordnet ist.

12. Helikopterlastenhaken (1) nach einem der Ansprüche 8 bis 11, wobei die Anzeigefahne (212) derart dimensioniert und farblich gestaltet ausgebildet ist, dass sie aus dem Gehäuse (10) herausragt und aufgrund einer Signalfarbe ein Pilot die Anzeigefahne (212) vom Cockpit aus erkennt.

## Claims

1. A helicopter load hook (1), comprising a housing (10), a hook (11) and release mechanism (2) that can be mounted in a fixed position in the housing (10) for purposes of a controllable identification and release of a swivel movement of the hook (11) about a hook axis of rotation (H), wherein the release mechanism (2) comprises a magnetic switch (20) and a drum that can rotate (21),
**characterised in that**,
the release mechanism (2) comprises at least one latching piece (22) that can be swivelled about a latching piece axis of rotation (A), and a force receiver (23) that can be swivelled about a swivel axis (W), together with a pin (234), wherein the pin (234) can be operatively connected with a locking lug (210) on the drum (21) together with a hook follower (111) on the hook (11), such that an indirect connection between the hook (11) and the drum (21), or more particularly, the magnetic switch (20), can be achieved, and any direct contact between the hook (11) and the magnetic switch (20) is eliminated, wherein in the closed position of the hook (11) the pin (234) makes any swivelling movement of the hook (11) impossible.

2. The helicopter load hook (1) in accordance with claim 1, wherein the force receiver (23) comprises a shaft (230), through which the swivel axis (W) runs, and which, together with the pin (234), is held by means of at least one connecting plate (233).

3. The helicopter load hook (1) in accordance with one of the preceding claims, wherein the latching piece (22) with a latching piece spring (222) is mounted in a preloaded state on a connecting plate (233) of the force receiver (23), and by virtue of its ability to swivel about the latching piece axis of rotation (A) can be operatively connected with a notch (211) on or in the drum (21).

4. The helicopter load hook (1) in accordance with one of the preceding claims, wherein the force receiver (23) is preloaded against the hook (11) by means of at least one spring (232), pushing the hook (11) into the open position.

5. The helicopter load hook (1) in accordance with claim 2 and 4, wherein the spring (232) of the force receiver (23) is held under preload in at least one spring retainer (2330) in at least one connecting plate (233).

6. The helicopter load hook (1) in accordance with one of the claims 2 to 5, wherein on the hook (11) is provided a recessed stop (112), which in the open state of the hook (11) comes into contact with a buffer stop (231) of the shaft (230).

7. The helicopter load hook (1) in accordance with one of the preceding claims, wherein at least one needle bearing (235) is arranged on the pin (234) for purposes of low wear rolling of the hook follower (111) on the pin (234).

8. The helicopter load hook (1) in accordance with one of the preceding claims, wherein at least one indicator flag (212) is formed or attached on the drum (21), which indicator flag can be moved through an indicator opening (101) in the housing (10) and can be seen protruding from the housing.

9. The helicopter load hook (1) in accordance with one of the preceding claims, wherein the at least one magnetic switch (20) can be operated electromagnetically and control signals can be transmitted via at least one electrical terminal (13) on the at least one magnetic switch (20).

10. The helicopter load hook (1) in accordance with one of the preceding claims, wherein a second magnetic switch (20') and a second drum (21') are arranged in the housing (10), interacting with the force receiver (23) and the latching piece (22).

11. The helicopter load hook (1) in accordance with one of the preceding claims, wherein a hook tip (110) can be operationally connected with a security latch (12) arranged in a fixed position on the housing (10), wherein the hook tip (110) is arranged on the side of the hook (11) that is opposite the hook follower (111).

12. The helicopter load hook (1) in accordance with one of the claims 8 to 11, wherein the indicator flag (212) is designed to be dimensioned and coloured such that it protrudes from the housing (10), and by virtue of a signal colour a pilot detects the indicator flag (212) from the cockpit.

## Revendications

1. Crochet de suspension de charges (1) pour hélicoptère, comprenant un corps (10), un crampon (11) et un système de libération (2) pouvant être logé de manière stationnaire dans le corps (10), pour l'immobilisation et la libération contrôlables d'un déplacement en pivotement du crampon (11) autour d'un axe de rotation (H) de crampon,
le système de libération (2) comprenant un commutateur magnétique (20) et un tambour (21) rotatif,
**caractérisé en ce que**
le système de libération (2) comprend au moins une pièce de blocage (22) déplaçable en pivotement autour d'un axe de rotation (A) de pièce de blocage et
au moins un transducteur de force (23) déplaçable en pivotement autour d'un axe de pivotement (W), avec un boulon (234), le boulon (234) pouvant être amené en liaison active avec un tenon de verrouillage (210) sur le tambour (21), ainsi qu'avec un entraîneur de crampon (111) sur le crampon (11), de sorte à pouvoir obtenir une liaison indirecte entre le crampon (11) et le tambour (21), respectivement le commutateur magnétique (20) et à exclure un contact direct avec le crampon (11) et le commutateur magnétique (20), le boulon (234) rendant impossible un déplacement en pivotement du crampon (11) dans la position fermée du crampon (11).

2. Crochet de suspension de charges (1) pour hélicoptère selon la revendication 1, le transducteur de force (23) comprenant un arbre (230) à travers lequel s'écoule l'axe de pivotement (W) et qui ensemble avec le boulon (234) est maintenu par au moins une tôle de liaison (233).

3. Crochet de suspension de charges (1) pour hélicoptère selon l'une quelconque des revendications précédentes, la pièce de blocage (22) étant logée en étant précontrainte par un ressort (222) de pièce de blocage sur une tôle de liaison (233) du transducteur de force (23) et par son aptitude au pivotement, pouvant être amenée en liaison active autour de l'axe de rotation (A) de la pièce de blocage par une encoche (211) sur ou dans le tambour (21).

4. Crochet de suspension de charges (1) pour hélicoptère selon l'une quelconque des revendications précédentes, le transducteur de force (23) étant précontraint au moyen d'au moins un ressort (232) contre le crampon (11), en poussant la crampon (11) dans la position d'ouverture.

5. Crochet de suspension de charges (1) pour hélicoptère selon la revendication 2 et 4, le ressort (232) du transducteur de force (23) étant maintenu en étant précontraint dans au moins un logement de ressort (2330) dans l'au moins une tôle de liaison (233).

6. Crochet de suspension de charges (1) pour hélicoptère selon l'une quelconque des revendications 2 à 5, sur le crampon (11) étant prévu un évidement de butée (112) qui en position ouverte du crampon (11) s'appuie sur un tampon de butée (231) de l'arbre (230).

7. Crochet de suspension de charges (1) pour hélicoptère selon l'une quelconque des revendications précédentes, sur le boulon (234) étant placé au moins un roulement à aiguilles (235) pour permettre le roulement provoquant peu d'usure de l'entraîneur de crampon (111) sur le boulon (234).

8. Crochet de suspension de charges (1) pour hélicoptère selon l'une quelconque des revendications précédentes, sur le tambour (21) étant moulée ou fixée au moins une languette de signalisation (212) qui à travers un orifice de signalisation (101) est visible en étant mobile dans le corps (10) et en saillant hors du corps.

9. Crochet de suspension de charges (1) pour hélicoptère selon l'une quelconque des revendications précédentes, l'au moins un commutateur magnétique (20) étant actionnable par voie électromagnétique et des signaux de commande pouvant être transmis par l'intermédiaire d'au moins une connexion électrique (13) à l'au moins un commutateur magnétique (20).

10. Crochet de suspension de charges (1) pour hélicoptère selon l'une quelconque des revendications précédentes, un deuxième commutateur magnétique (20') et un deuxième tambour (21') étant placés dans le corps (10), en interaction avec le transducteur de force (23) et la pièce de blocage (22).

11. Crochet de suspension de charges (1) pour hélicoptère selon l'une quelconque des revendications précédentes, une pointe de crampon (110) pouvant être amenée en liaison active en étant fixement placée sur le corps (10) avec une patte de sécurité (12), la pointe de crampon (110) étant placée sur le côté du crampon (11) qui est opposé à l'entraîneur de crampon (111).

12. Crochet de suspension de charges (1) pour hélicoptère selon l'une quelconque des revendications 8 à 11, la languette de signalisation (212) étant dimensionnée et conçue en couleur de telle sorte qu'elle saillisse hors du corps (10) et sur la base d'une couleur de signalisation, un pilote identifie la languette de signalisation (212) à partir du cockpit.
